Europäisches Patentamt

European Patent Office

Office européen des brevets

(11) Publication number: **0 203 948**

**B1**

# EUROPEAN PATENT SPECIFICATION

(45) Date of publication of patent specification: **24.05.89**

(51) Int. Cl.⁴: **F 16 B 12/30, F 16 B 7/18**

(21) Application number: **85905812.5**

(22) Date of filing: **11.11.85**

(86) International application number:
**PCT/EP85/00603**

(87) International publication number:
**WO 86/03265 05.06.86 Gazette 86/12**

(54) **SECTIONAL STRUCTURE FOR CARPENTRY, PARTICULARLY ADAPTED TO REALIZE RACKS.**

(30) Priority: **23.11.84 IT 2372884**
**21.12.84 IT 2424684 u**

(43) Date of publication of application:
**10.12.86 Bulletin 86/50**

(45) Publication of the grant of the patent:
**24.05.89 Bulletin 89/21**

(84) Designated Contracting States:
**AT BE CH DE FR GB LI LU NL SE**

(56) References cited:
**BE-A- 687 929**
**DE-A-1 654 759**
**DE-A-2 627 260**
**DE-A-3 324 675**
**DE-B-2 552 983**
**GB-A-1 285 411**
**GB-A-2 152 174**
**US-A-3 292 323**
**US-A-4 012 153**

(73) Proprietor: **Italtel Tecnomeccanica s.p.a.**
**Strada Maratta Bassa Km. 3,695**
**I-05100 Terni (IT)**

(72) Inventor: **ROMANELLO, Giampaolo**
**Via Solari, 23**
**I-20144 Milano (IT)**
Inventor: **SALVATORE, Daniele**
**Viale dei Fiori, 59**
**I-20095 Cusano Milanino (Milano) (IT)**
Inventor: **CECCHELLERO, Sergio**
**Via Gozzoli, 4**
**I-20152 Milano (IT)**
Inventor: **MARTELLI, Enzo**
**Vocabolo Campo Maggiore di Cesi, 21/G**
**I-05100 Terni (IT)**

(74) Representative: **Coggi, Giorgio**
**ITALTEL Società Italiana Telecomunicazioni**
**s.p.a. (Servizio Brevetti) Casella Postale 10**
**I-20019 Settimo Milanese (MI) (IT)**

Courier Press, Leamington Spa, England.

## Description

The present invention relates to a sectional structure particularly for use in the realisation of carpentry works, e.g. of the type adapted to support electrical of electronic devices.

The circuits and devices needed for implementation of electrical or electronic systems are usually located inside racks that perform the double function of support and protection. The racks in question must provide a good and strong mechanical structure as, due to safety reasons, they are usually required to be able to stand relevant stresses, including bursts or explosions which might occur in electric energy distribution systems caused by possible short-circuit events. To comply with the mecahnical robustness, such racks are usually realised with a metal structure covered by panels anchored to the structure itself.

Considering that such racks may present a wide range of sizes, the metal structure is usually obtained by assembling a plurality of elementary pieces which are obtained by the subdivision of a bar which in turn is obtained by shearing and then folding iron sheets.

The Patent GB—A—2,152,174 refers to a modular structure, particularly fit for the realisation of industrial racks, mainly constituted by a plurality of bars which are linked through joints.

These latter mainly consist of a cubic body, wherein the three faces locating a trihedron angle each provide a shank of shape complementary to the inner profile of the bars, said cubic body having in the center area a cavity which communicates with any of the six faces through a respective clearance hole. The three clearance holes communicating with the faces of the cubic body providing said shanks are so shaped as to receive the head of a respective screw, whose shank can be screwed into an anchorage element which is placed inside the bars. The remaining three clearance holes are provided with a thread so that they can accomodate devices of different type, as hereafter better specified. Using the elements mentioned above it is possible to realize a parallelopiped—shaped structure which, if covered by panels, can provide industrial racks having a good mechanical robustness.

In some cases it is necessary to combine and anchor, horizontally or vertically, two or more structures in order to realize a row of racks or a block composed by three or four racks.

DE—B—2,552,983 describes a cylindric-shaped coupling element connected through screws, having a conic-shaped shank, to the corner element of the two structures to be coupled, the above cylindric-shaped element does not allow the coupling of three or four structures.

One of the technical problems of the present invention is the realization of a coupling element fit to lock a single pair of structures of sectional-type as to be adapted to other complex architectures which become necessary to assemble blocks of racks.

One of the purposes of the present invention is the solution of the above technical problem by realizing an element particularly simple and cheap.

To this end the element according to the embodiment is constituted by an elongate element and by a pair of screws. The portion of said element, perpendicular to its main axis, presents a dimension $d$ inferior to diameter D of the clearance holes provided on said joints. Said body presents on both of its ends a seat having a width not inferior to said entity $d$ and a depth non inferior to d/2, faced by a hole which is on the other end truncated cone-shaped. The screws above have a threaded head and the shank has a truncated cone- and a cylindric-shaped section. A further purpose of the present invention is a simple and cheap type of elastic plate allowing the locking of cross-bar among pairs of the above mentioned bars.

Further characteristics of the structure can be taken from the following description which refers to a non-limiting example shown in the following drawings, whereas:

Figure 1 shows a perspective view of the structure using the solutions which are the base of the invention;

Figure 2 shows a detailed view of one of the prior art joints 2 of Figure 1;

Figure 3 shows a section of one of the joints 2 of Figure 1;

Figure 4 shows a detailed view of one of the coupling elements 20 of the invention;

Figure 5 shows a coupling element 20 together with two joints;

Figure 6 shows a frame realized by the coupling element 20 of Figure 4 together with four joints 2 corresponding to four different structures;

Figure 7 shows section A of Figure 1 with the explosion of the single elements;

Figure 8 shows a view of the elastic plate 27 of the invention;

Figure 9 shows a side view of the bar 25 of Figure 7 which supports said elastic plate 27.

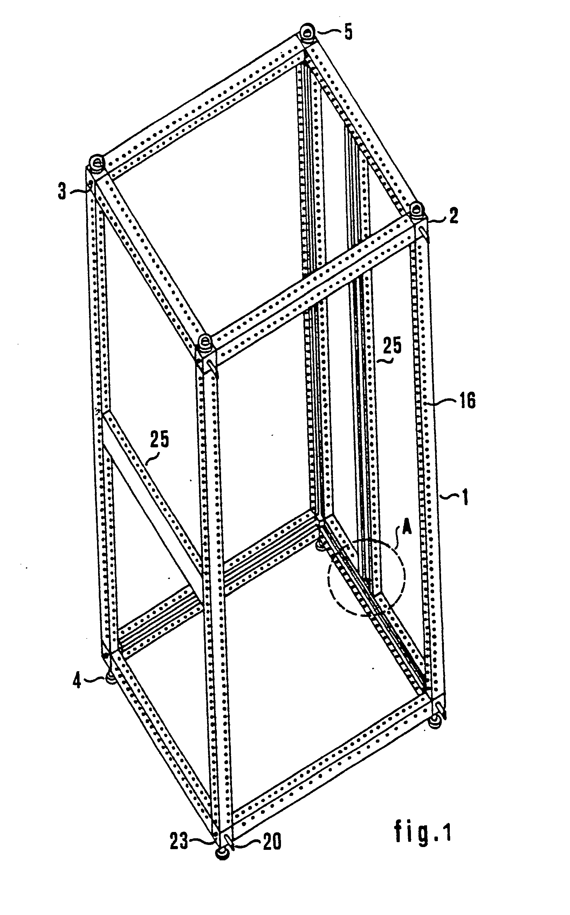

The structure of Figure 1 is realized by way of a plurality of bars 1 and a plurality of joints 2. These latter mainly consist of a cubic body whose side size corresponds to the outer size of the transversal section of bars 1.

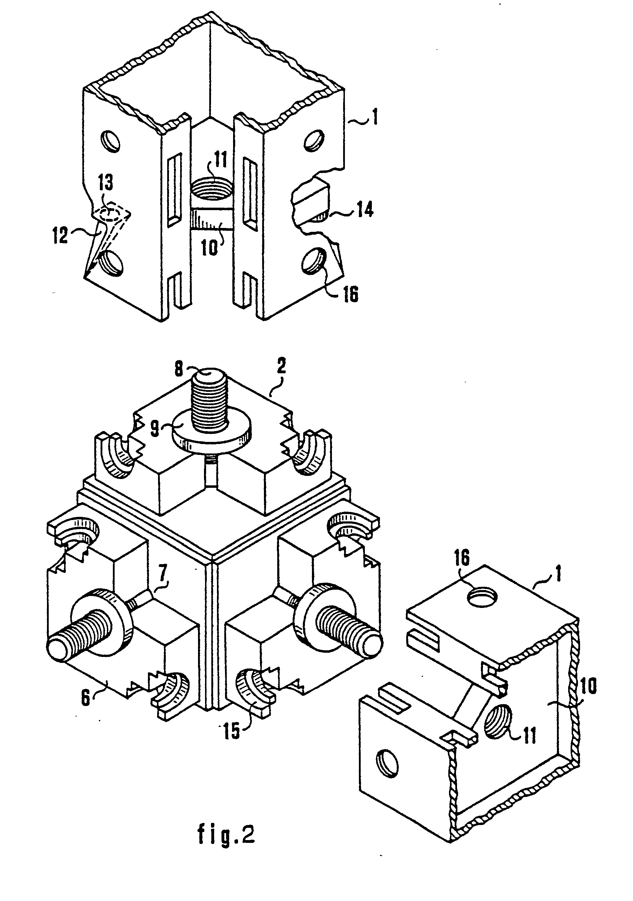

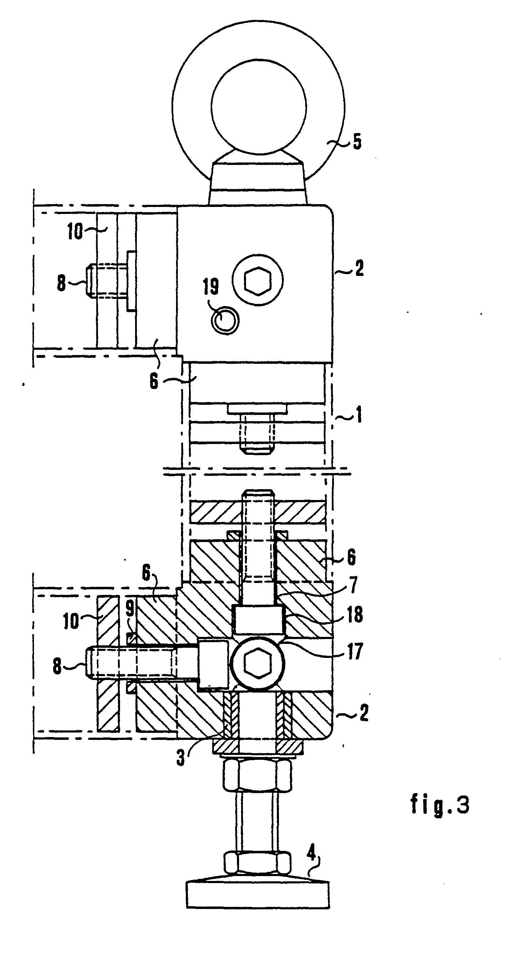

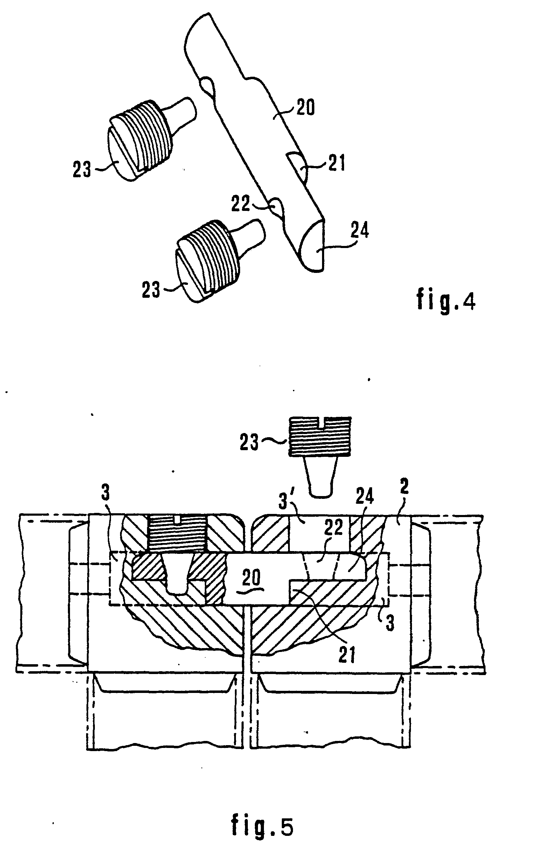

Three faces of the cubic body locating a trihedron angle are coupled to as many bars 1 via joints illustrated in detail in Figures 2 and 3. The remaining three faces of the cubic body present a threaded hole 3 (better shown in Figure 3) fit to receive a plurality of elements such as the shank of feet 4, or the shank of devices 5 adapted to allow the hoisting of the structure or the coupling element 20 of the invention better shown in Figure 4.

Figure 2 shows in detail one of such joints 2 together with two bar portions 1. As evident this figure illustrates the faces of the joint destined to be joined to bars 1 and to this aim said faces provide a shank 6, whose profile coincides with the inner profile of bars 1. The axis of each of these three faces coincides with the axis of a hole 7 which is arranged to receive the shank of a screw 8, whose head is allocated in a cavity inside the cubic body as better indicated in the following description of Figure 3.

Screw 8 provides such a length that a good portion thereof comes out from the free end of the shanks and its shifting according to the axis is reduced by the head on the one side and by an elastic ring 9 on the other side; the ring is coupled to the screw when a structure composition occurs. This ring avoids in fact that the screw comes out of its place before or during said composition operation.

The structure further provides the presence of anchorage elements consisting for example of a plate 10 whose shape coincides with the inner profile of the bars 1. Such plates 10 are inserted inside the bars and joined thereto, for example through soldering, at a distance from the ends not inferior to the height of shanks 6 of the cubic body. Plates 10 provide a threaded hole 11 fit to receive the shank of said screws 8, whose center coincides with the axis of bars 1.

The plates 10 are coupled to bars 1 at least through a pair of stirrups 12, illustrated in the vertical bar of Figure 2. These stirrups 12 may be obtained by way of as many drawings effected on at least two opposite angles of the bars, so structured as to provide a flat surface in coincidence with the area of contact with plate 10.

This flat surface of drawings 12 provides a hole 13 adapted to receive a respective tooth 14 of plate 10. The use of said stirrups involves a change in the profile of shanks 6 which will have to provide chamfered angles (not illustrated) fit to receive the drawings of said bars.

The figure also shows cavities 15 on shanks 6 to receive the shank of screws which are to be screwed into threaded holes 16 provided on bar 1 (see Figure 1). Such screws have the task of performing the tightening of panels if the structure is provided for the implementation of racks.

Another realisation provides shanks 6 shaped as illustrated in Figure 5 and does not require therefore the presence of cavities 15.

Figure 3 illustrates the section of a joint as well as a view of a second joint.

From said section it is possible to see that the center of the cubic body 2 coincides with the center of a cavity 17 which communicates with each face of the cubic body through holes 7.

In particular the holes which communicate with the faces equipped with said shanks 6 provide such a diameter as to receive the shank of screws 8, and in coincidence with the end facing the cavity 17, such a diameter is so enlarged as to create a place 18 adapted to receive the head of the screw.

The holes 3 communicating with the remaining three faces provide instead a diameter not inferior to the diameter of the screw heads such that they can be crossed by the shank of a tool fit to allow the screwing of the shank as mentioned above. At least one of these three latter holes is threaded to allow the screwing of the shank of one of the elements 4, 5 or 20 mentioned above.

The faces of joint 2 not presenting said shanks 6 provide a further threaded hole 19 that is aligned, in an assembled structure, with holes 16 on bars 1 in order to allow, for instance, the anchorage of said panels to both bars 1 and joints 2.

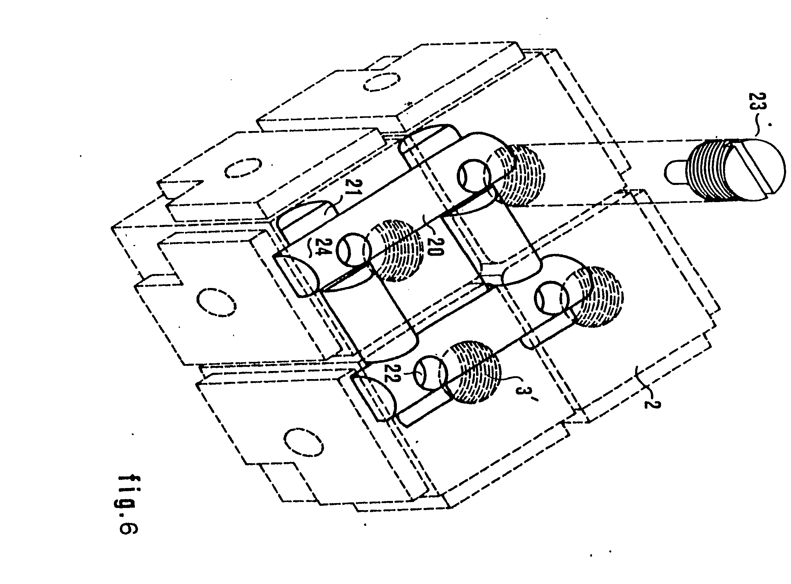

Figure 4 shows a coupling element 20 adapted to allow the joining of two or more modular structures of the type mentioned above. Such an element is composed by a body element 20, elongate, mainly constituted by a cylinder having a diameter $d$ inferior to the diameter D of said threaded holes 3 of joints 2. On each end of element 20 there is a seat 21 whose width corresponds to $d$ and whose depth corresponds to $d/2$, having the task to allow the realisation of a frame similar to that one illustrated in Figure 6.

A hole 22 faces said seat 21, and the axis of the hole is perpendicular to axis of the element 20 and the hole 22 is truncated cone-shaped.

The coupling element allows the presence of a pair of screws 23 which have a threaded head and the shank shaped to the said hole 22 size.

Figure 5 shows a pair of joints 2 that are part of two structures, as illustrated in Figure 1, and are adapted to be coupled by way of the element shown in Figure 4.

The said coupling is realized by inserting the element 20, up to the half of its greatest size, in one of the holes 3 of the first joint 2 and inserting the remaining half in the opposite hole 3 of a second joint 2. The insertion is correct when the axis of each hole 22 corresponds with the relative axis of holes 3, perpendicular to holss 3' where the element 20 is inserted, and when such a portion, truncated cone-shaped, faces the corresponding hole 3'. Once reached such a condition it is then possible to start the blocking operation to be performed through screws 23, whose shanks have to be placed inside holes 22 provided on element 20.

The truncated cone-shaped portion of screws 23 has the task to allow the screwing when the alignment above mentioned is not reached.

Such a portion in fact is engaged against the truncated cone-shaped portion of holes 22 and causes therefore a side shifting of element 20 till to reach the coincidence of the axis as above. In such a condition it is possible to complete the coupling operation by producing the placing of the cylindric portion of the shank of screw 23 into the cylindric portion of hole 22.

Figure 6 shows a frame that is composed by four coupling elements similar to those ones illustrated in Figure 4. Such a frame is adapted to block four sectional structures whose joints are shown with a dotted line. The frame is of modular type due to the presence of said seats 21 which allow the placing at right angle of two contiguous elements as well as the placing of end 24 of an element 20 in seat 21 of the contiguous element 20.

As said seats 21 have a depth equal to $d/2$, where an overlap of the ends of two contiguous elements 20 takes place, the frame presents a $d$ size and is therefore adapted to be placed inside said holes 3' of joints 2. The joining of each pair of elements 20 to the corresponding joint 2 is realised through a single screw 23 once reached the alignment of hole 22 on an element 20 to the same hole of the contiguous element 20 as well as to the relative hole 3'.

Remaining always in the same solution, it is possible to realize such elements 20 without seats 21. In this way it is obtained an element able to accept a pair of structures, but unable to form frames for the joining of other sectional structures as illustrated in Figure 6.

Making again reference to Figure 1 it is possible to note that in some embodiments the structure described above is completed with cross-bars 25, horizontally or vertically placed, that have their ends joined between two vertical or two horizontal bars 1 through means at this end provided.

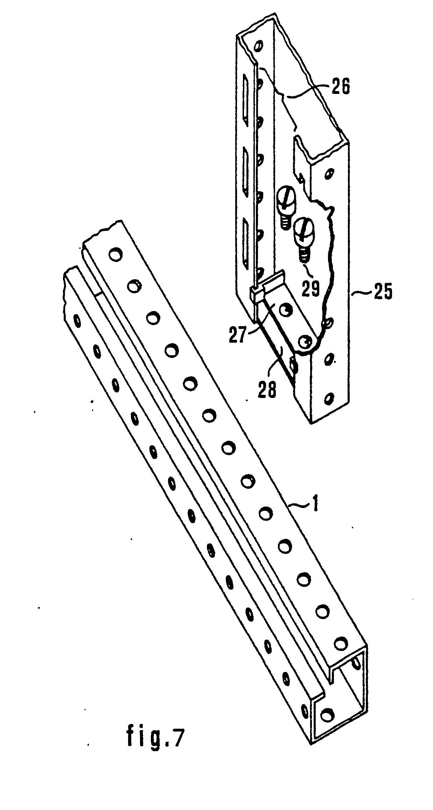

Figure 7 shows the particular A of Figure 1 in order to better evidence the structure of said cross-bars 25 as well as the anchorage elements as stated above. In particular it is possible to note that the horizontal section of said cross-bars is rectangular-shaped where one of the longer sides provides an opening 26 through which a plate 27, fit for the assembly operation, is inserted. The anchorage elements are composed of a base element 28, provided at each and of cross-bars 25, which is mainly obtained by folding a section of the aluminium or iron sheet which composes the cross-bars 25.

The outer part of element 28 is linked to the side of a vertical bar 1 and has to be tightly coupled to the same through two screws 29, supported by an elastic plate 27 realized according to the invention.

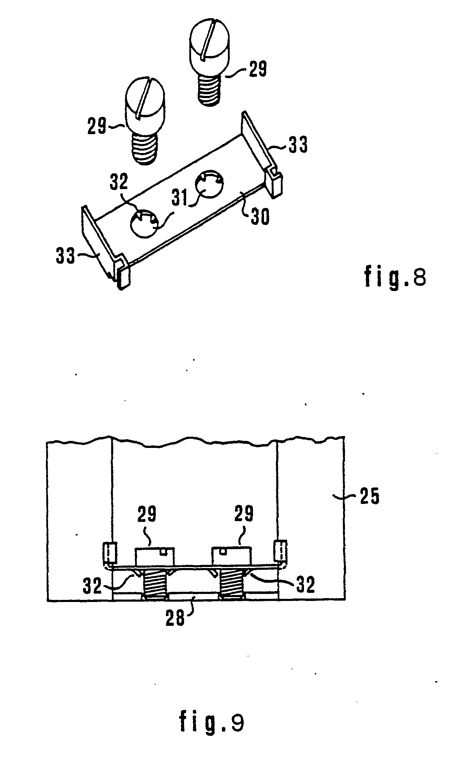

It will be more evident in the continuation of the description and with reference to Figure 8 that said screws 29 have their axes coincident with the axes of the holes provided in the base element 28 making therefore easier the coupling operation, that could be realized by introducing a screwdriver in the opening 26 of the cross-bars 25 and performing the screwing operation without having to support the screws. From Figure 8 it is evident that the elastic plate 27 is composed by a base body 30, adapted to be placed inside the cross-bars 25 and which is equipped with a pair of holes 31 with a diameter superior to the shank diameter of screws 29. Holes 31 are provided with apexs 32 which, due to the elastic composition, lose their proper shape and, engaging against the threaded screws 29, prevent the same from coming out of the holes.

The elastic plate further provides a pair of arms 33 that according to a preferential embodiment are disposed at right angle relative to the base body 30. One end of the arms is in fact joined to one end of the base body 30, while the other end is so shaped as to be complementary with one of the edges of said cross-bars 25 which delimits the opening 26 mentioned above. This latter end of arms 33 has the task to perform the elastic anchorage of the plate to said edges.

Figure 9 shows a side view of bar 25 of Figure 7 in order to evidence the function performed by the apexs 32. In addition to the locking of screws 29, the apexes provide the electric connection of the elastic plate to the horizontal bars by scratching, during the locking operation of screws 29, the paint deposited in the base element 28. The said electric connection is required for instance when the industrial racks are assigned to the allocation of electronic devices.

According to a preferential embodiment the said plate is equipped with the holes 31, whose axes are 20 mm apart and the holes provided on the side of the vertical bars 1 as well as the holes on the sides of cross-bars 25 have the same 20 mm step. It has been noticed that a step as described above is considered the optimum when the said structure has to be realised using flexible automatic lines which make easier the working of the processor that controls the production line.

The structure fulfills the requirements cited, is of modular type and easily composable.

This latter feature comes from the structure which uses a single screw 8 for the joining of one bar 1 to a joint 2 and uses said elastic plate 27 which facilitates the joining operation of cross-bars 25 to bars 1, enabling the preassembling of the screws with the cross-bars ends.

**Claims**

1. A sectional structure for carpentry, particularly adapted to realize a rack, of the type comprising a plurality of bars joined through screws to a plurality of joints, these latter consisting of a cubic body wherein the three faces locating a trihedron angle each provide a shank of shape complementary to the inner profile of the bars, said cubic body providing in its center area a cavity which communicates with any of the six faces through a respective clearance hole, the clearance holes communicating with the faces of the cubic body providing said shanks being adapted to accomodate said screws whose head is placed in a section communicating with such a cavity and whose shank is screwed into threaded holes which are obtained on anchorage elements joined to the bars, characterized in that said sectional structure comprises coupling means with at least a similar sectional structure, said coupling means being composed of an elongate coupling element (20) to be inserted into the clearance holes (3) and presenting near each end a transverse hole (22), and of a pair of screws (23), wherein the section of said coupling element (20) perpendicular to its main axis presents a diameter $d$ inferior to the diameter D of the clearance holes (3) provided in said cubic body, in that said transverse holes (22) have a first truncated cone-shaped section and a second cylindric-shaped section, and in that said screws (23) have a threaded head and a shank having a truncated cone-section and a cylindric-shaped section.

2. A sectional structure as claimed in claim 1, characterized in that said coupling element (20) on each end presents a seat (21) with a width not inferior to such diameter $d$ and a depth not inferior to $d/2$, and in that the cylindric-shaped section of the said screws (23) is longer than that of said holes (22).

3. A sectional structure as claimed in at least one of the claims above and comprising a plurality of cross-bars with a transversal section, polygonal shaped, and joined perpendicular to the bars through elastic plates, characterized in that each elastic plate (27) is composed at a base element (30) and at least two arms (33), in that the base element has at least a hole (31) adapted to receive the screw shank (29) which performs the assembly of bars (1) to cross-bars (25) and in that one end of the arms (33) is joined to the base element (30) while the other end is so shaped as to be complementary to the edges of an opening (26) of said cross-bars (25).

4. A sectional structure as claimed in claim 3, characterized in that said arms (33) at the sides of the base element are disposed at right angle relative to this base element (30) and in that said hole (31) is equipped with elastic apexes (32).

5. A sectional structure as claimed in claim 4, characterized in that said elastic plate (27) provides two holes (31) whose axes are 20 mm apart, that is the maximum distance between the axes of a contiguous pair of the holes (16) provided on the sides of the bars (1).

## Patentansprüche

1. Eine aus Segmenten bestehende Stahlbaustruktur, besonders für die Herstellung von Gestellen geeignet, die aus mehreren Stangen bestehen, welche mittels Schrauben an mehreren Verbindungselementen befestigt sind, wobei letzter aus einem würfelförmigen Gehäuse bestehen, in dem die drei Seiten, die einen dreiseitigen Winkel bilden, jeweils mit einem Gelenkstück versehen sind, das dem Innenprofil der Stangen entspricht und wobei dieses würfelförmige Gehäuse in seinem mittleren Bereich mit einer Öffnung versehen ist, die mit jeder der sechs Würfelseiten durch eine entsprechende Durchgangsöffnung verbunden ist; die Durchgangsöffnungen stehen mit den Flächen des würfelförmigen Gehäuses in Verbindung, so daß die genannten Gelenkstücke obige Schrauben aufnehmen können, deren Kopf sich jeweils in einem Segment befindet, das mit einer der obengenannten Öffnungen in Verbindung steht, und deren Schaft jeweils in eine der Gewindeborhrungen eingeschraubt wird, die in Befestigungselementen ausgeführt sind, welche mit den Stangen verbunden sind, dadurch gekennzeichnet, daß diese Segmentstruktur Verbindungsmittel mit einer zumindestens ähnlichen Segmentstruktur umfaßt, die wiederum aus einem länglichen Verbindungselement (20), das in die Durchgangsöffnungen (3) einzustecken ist, und an jedem Ende eine Queröffnung (22) aufweist, sowie aus einem Schraubenpaar (23) bestehen, wobei der Querschnitt dieses Verbindungselements (20) senkrecht zu seiner Hauptachse einen Durchmesser $d$ aufweist, der kleiner als der Durchmesser D der Durchgangsöffnungen (3) im würfelförmigen Gehäuse ist, und daß diese Queröffnungen (22) einen ersten abgeflachten, kegelförmigen Querschnitt und einen zweiten zylindrischen Querschnitt aufweisen und die Schrauben (23) mit einem Gewindekopf und einem Schaft versehen sind, der wiederum einen abgeflachten kegelförmigen und einen zylindrischen Querschnitt aufweist.

2. Eine aus Segmenten bestehende Struktur gemäß Anspruch 1, dadurch gekennzeichnet, daß das Verbindungselement (20) an jedem Ende mit einem Sitz (21) versehen ist, dessen Breite nicht geringer als der Durchmesser $d$ und dessen Tiefe nicht kleiner als $d/2$ ist, und daß der zylindrische Querschnitt der Schrauben (23) länger als bei den Öffnungen (22) ist.

3. Eine aus Segmenten bestehende Struktur gemäß mindestens einem der obigen Ansprüche, die mehrere Querstangen mit einem vieleckigen Querschnitt aufweist, welche senkrecht.zu den Stangen durch Federplatten mit ihnen verbunden sind, dadurch gekennzeichnet, daß jede Federplatte (27) aus einem Basiselement (30) und mindestens zwei Armen (33) besteht, daß das Basiselement mindestens zwei Öffnungen (31) aufweist, die jeweils den Schraubenschaft (29) aufnehmen können, mit dem die Stangen (1) an den Querstangen (25) befestigt sind, und daß ein Ende der Arme (33) jeweils mit dem Basiselement (30) verbunden ist, während das andere Ende so ausgeführt ist, daß es jeweils in den Rand einer Öffnung (26) der Querstangen (25) hineinpaßt.

4. Eine aus Segmenten bestehende Struktur gemäß Anspruch 3, dadurch gekennzeichnet, daß die Arme (33) an der am Basiselement befindlichen Seite rechtwinklig zu diesem Basiselement (30) angeordnet sind und daß die Öffnung (31) mit elastischen Enden (32) versehen ist.

5. Eine Aus Segmenten bestehende Struktur gemäß Anspruch 4, dadurch gekennzeichnet, daß die Federplatte (27) zwei Öffnungen (31) aufweist, deren Achsen sich im Abstand von 20 mm befinden, wobei dies der maximale Abstand zwischen den Achsen von zwei nebeneinander liegenden Öffnungen (16) ist, die an den Seiten der Stangen (1) ausgeführt sind.

## Revendications

1. Une structure en pièces détachées pour la charpenterie, tout particulièrement adaptée pour réaliser un râtelier, du type comprenant plusieurs barres unies par des vis à plusieurs joints qui consistent en un corps cubique où les trois faces faisant un angle trièdre chacune, donnent une tige de forme complémentaire au profil intérieur des barres, dit corps cubique donnant dans sa surface centrale une cavité communicant avec chacune des six faces à travers un trou respectif de dégagement, les trous de dégagement communicant avec les faces du corps cubique faisant lesdites tiges étant adaptées pour mettre en place lesdites vis dont la tête est placée sur une pièce communicant avec une telle cavité et dont la tige est vissée dans des trous filetés qui sont obtenus d'éléments d'ancrage unis aux barres, caractérisés en ce que ladite structure en pièces détachées comprend des instruments de couplage avec au moins une structure en pièces semblable, lesdits instruments de couplage étant composés d'un élément de couplage allongé (20) devant être inséré dans les trous de dégagement (3) et présentant près de chaque extrémité un trou transversal (22) et deux vis (23) où la section du dit élément de couplage (20) perpendiculaire à l'axe principal présente un diamètre *d* inférieur au diamètre D des trous de dégagement (3) existant dans ledit corps cubique en ce que lesdits trous transversaux (22) ont une première pièce coupée en forme de cône et une seconde pièce de forme cylindrique et en ce que lesdites vis (23) ont une tête filetée et une tige ayant une pièce de cône coupée et une pièce de forme cylindrique.

2. Une structure en pièces détachées comme revendiqué dans la revendication 1, caractérisée en ce que ledit élément de couplage (20) à chaque extrémité présente un siège (21) d'une largeur non inférieure à un diamètre *d* et d'une profondeur non inférieure à *d/2*, en ce que la pièce de forme cylindrique des dites vis (23) sont plus longue que ces dits trous (22).

3. Une structure en pièces détachées comme revendiqué dans au moins une des revendications ci-dessus et comprenant plusieurs barres transversales avec une pièce transversale, en forme de polygone et unie perpendiculairement aux barres par des plateaux élastiques, caractérisées en ce que chaque plateau élastique (27) est composé d'un élément de base (30) et d'au moins deux bras (33), en ce que l'élément de base a au moins un trou (31) adapté pour recevoir la tige de la vis (29) qui réalise l'assemblage de barres (1) aux barres transversales (25) et en ce qu'une extrémité des bras (33) est unie à l'élément de base (30) tandis que l'autre extrémité a une forme telle qu'elle est complémentaire aux bords d'une ouverture (26) des dites barres transversales (25).

4. Une structure en pièces détachées comme revendiqué dans la revendication 3, caractérisée en ce que lesdits bras (33) sur les côtés de l'élément de base sont disposés à la droite de l'angle relatif à cet élément de base (30) et en ce que ledit trou (31) est muni de pointes élastiques (32).

5. Une structure en pièces détachées comme revendiqué dans la revendication 4, caractérisée en ce que ledit plateau élastique (27) a deux trous (31) dont les axes ont 20 mm à part, ce qui est la distance maximale entre les axes de deux trous contigus (16) mis sur les côtés des barres (1).

fig.1

fig.2

fig.3

EP 0 203 948 B1

fig.4

fig.5

4

fig.6

fig.7

29

29

33

32

31

30

33

fig.8

25

29

29

32

32

28

fig.9